# EUROPÄISCHE PATENTSCHRIFT

(11) **EP 3 409 515 B1**
(45) Veröffentlichungstag und Bekanntmachung des Hinweises auf die Patenterteilung: **27.11.2019**
(21) Anmeldenummer: 18174665.2
(22) Anmeldetag: 29.05.2018
(51) Int. Cl.: B60G 17/015, B60G 17/016, B60G 21/055

(54) **AKTIVES FAHRWERK UND VERFAHREN ZUR STEUERUNG EINES AKTIVEN FAHRWERKS**
ACTIVE SUSPENSION AND METHOD FOR CONTROLLING AN ACTIVE SUSPENSION
SUSPENSION ACTIVE ET PROCÉDÉ DE COMMANDE DE LA SUSPENSION ACTIVE

(30) Priorität: 02.06.2017 LU 100274
(43) Veröffentlichungstag der Anmeldung: 05.12.2018
(73) Patentinhaber: Ovalo GmbH, 65555 Limburg (DE)
(72) Erfinder:
(74) Vertreter: Hoffmann, Jürgen

(56) Entgegenhaltungen:
- EP-A1- 2 336 005
- DE-A1-102010 041 404
- US-A1- 2010 164 189

## Beschreibung

Die Erfindung betrifft ein Verfahren zur Steuerung eines aktiven Fahrwerks eines Fahrzeugs.

Die Erfindung betrifft außerdem Aktives Fahrwerk mit einer Stellvorrichtung, die wenigstens einen Aktuator beinhaltet.

Aktive Stabilisierungssysteme, insbesondere zur Verbesserung des Wankverhaltens bei Kurvenfahrten und/oder zum Vermeiden oder Reduzieren von Nickbewegungen beim Anfahren oder Bremsen, sind in unterschiedlichsten Ausführungsformen bekannt.

Beispielsweise gibt es Systeme, bei denen zwischen den Stabilisatorstangenhälften eines geteilten Stabilisators ein aktiv geregelter Aktuator angeordnet ist, der je nach Fahrsituation die Stabilisatorstangenhälften gegeneinander verdreht, um einer durch die Zentrifugalkraft bewirkten Seitneigung des Fahrzeuges entgegen zu wirken. Hierbei wird das jeweils kurvenäußere Rad einer Achse mit einer zusätzlichen Kraft in Richtung Fahrbahn beaufschlagt, während das kurveninnere Rad mit einer von der Fahrbahn weg gerichteten Kraft beaufschlagt wird.

Aus DE 10 2005 031 036 A1 ist ein Schwenkmotor zur Wankregelung durch gegeneinander Verdrehen von zwei Kraftfahrzeugstabilisatoren bekannt. Der Schwenkmotor besteht mindestens aus einem Verstellantrieb mit einem Elektromotor, einem Schwenkmotorgetriebe und einem Gehäuse. Der Schwenkmotor ist zwischen den Kraftfahrzeugstabilisatoren, die auch als Hälften eines Gesamtstabilisators angesehen werden können, angeordnet und dazu bestimmt, aufgrund einer geeigneten Ansteuerung, diese Stabilisatorhälften bedarfsgerecht gegeneinander zu verdrehen.

Aus DE 10 2006 040 109 A1 ist ein aktiver, geteilter Kraftfahrzeugstabilisator mit eingebautem Schwenkmotor bekannt. Der Kraftfahrzeugstabilisator dient zur Wankregelung und weist einen Verstellantrieb mit einem Motor, einem Getriebe und mit einem Gehäuse auf. An einem Gehäuseteil ist ein Sensor zur Erfassung des Torsionwinkels des Stabilisatorteils angebracht, dessen Geber am Stabilisatorteil fixiert ist oder umgekehrt.

Aus DE 10 2008 048 950 A1 ist ein druckmittelbetätigbarer Schwenkmotor für ein Fahrzeug bekannt, der in einem geteilten Stabilisator angeordnet ist und mit dem die beiden Stabilisatorhälften zum Ausgleich von Fahrzeugbewegungen zueinander schwenkbar sind. Der Schwenkmotor weist einen in einem Gehäuse axial verschiebbaren Kolben und beidseitig zum Kolben angeordnete Arbeitsräume auf. Durch Druckmittelbeaufschlagung der Arbeitsräume in Verbindung mit einem oder mehreren Koppelelementen ist ein Drehmoment zwischen den Stabilisatorhälften erzeugbar. Zwischen den Arbeitsräumen besteht eine Verbindung, die mittels eines Ventils in Abhängigkeit von dem Fahrzustand des Fahrzeugs schließbar oder freigebbar ist.

Aus DE 10 2009 013 053 A1 ist ein Stabilisator für ein Fahrwerk eines Kraftfahrzeuges mit zumindest zwei Stabilisatorelementen bekannt, welche mittels zumindest eines elektromotorischen Aktuators zur Wankregelung verdrehbar sind und welche jeweils über zumindest eine Koppelstange mit dem Fahrwerk verbunden sind. Der Stabilisator ist mittels zumindest einer hydraulischen Freischalteinrichtung entkoppelbar.

Aus EP 2 011 674 A1 ist eine Stabilisatoranordnung, umfassend einen zweigeteilten Stabilisator, dessen Stabilisatorabschnitte eine rotatorische Relativbewegung zueinander ausführen und bei einer gegensinnigen Verdrehbelastung eine Rückstellkraft ausüben, bekannt. Die Rückstellkraft ist mittels eines Aktuators in Verbindung mit einem Getriebe einstellbar, wobei die Stabilisatoranordnung unabhängig von einer Torsionsfederwirkung der Stabilisatorabschnitte mindestens eine weitere Feder aufweist, die eine Torsionsfederwirkung bewirkt.

Eine ähnliche Vorrichtung ist aus DE 10 2009 006 385 A1 bekannt. Konkret offenbart diese Druckschrift einen Schwenkmotor für einen aktiven Wankstabilisator, der mit seinem Antrieb an eine Stabilisatorhälfte und der statorseitig an eine andere Stabilisatorhälfte eines geteilten Stabilisators angeschlossen werden kann.

Aus DE 10 2008 010 131 A1 ist ein Wankstabilisator für ein Kraftfahrzeug mit einem ersten und einem zweiten Stabilisatorteil, welche jeweils einem Rad einer gemeinsamen Fahrzeugquerachse des Kraftfahrzeugs zuordenbar und/oder zugeordnet sind, bekannt. Der Wankstabilisator weist ein Gehäuse auf, welches für eine kraftfahrzeugfeste Montage ausgebildet ist und in dem die zwei Stabilisatorteile zur Durchführung von gleichsinnigen und gegensinnigen Schwenkbewegungen gelagert sind. Außerdem ist eine Aktuatorvorrichtung vorgesehen, welche einen Elektromotor und ein Übertragungsgetriebe umfasst, wobei der Elektromotor zur Erzeugung eines Drehmoments und das Übertragungsgetriebe zur Weiterführung des Drehmoments an die Stabilisatorteile ausgebildet und/oder angeordnet sind, und wobei der Elektromotor von der Schwenkbewegung der Stabilisatorteile entkoppelt gelagert ist.

Außer dem vorgenannten Typ von Stabilisatorsystemen gibt es auch Systeme mit mehreren Aktuatoren, bei denen jeweils ein Aktuator ausschließlich einer Radaufhängung zugeordnet ist. Bei einem solchen System kann der Höhenstand eines Rades relativ zur Karosserie unabhängig von der Einstellung bei einem anderen Rad, insbesondere unabhängig vom Höhenstand des Rades derselben Fahrzeugachse, eingestellt werden. Ein solches System hat den Vorteil, dass die Räder einer Fahrzeugachse mit gleichgerichteten Kräften und/oder Drehmomenten beaufschlagt werden können, um beispielsweise einer Nickbewegung beim Anfahren und/oder Bremsen entgegenwirken zu können. Ein solches System ist beispielsweise aus DE 10 2010 037 180 A1 und aus DE 10 2010 037 555 A1 bekannt.

Aus DE 10 2010 041 404 A1 ist ein Torsionswankstabilisator mit zwei drehbar am Fahrzeugaufbau gelagerten Torsionsstäben, deren äußere Enden mit Radträgern einer Fahrzeugachse zur Aufnahme von durch die Radträgerbewegung übertragenen Drehungen verbunden sind, bekannt. Die Torsionsstäbe sind mittels wenigstens eines Koppelelements miteinander verbunden, wobei das Koppelelement so mit dem Fahrzeugaufbau verbunden ist, dass über die Torsionsstäbe und das Koppelelement wenigstens ein Teil der Radträgerbelastung durch die Torsionsstäbe aufgenommen wird, und dass über das Koppelelement eine Veränderung der wirksamen Länge wenigstens desjenigen Torsionsstabes mittels eines Wankaktuators einstellbar ist, der mit dem Radträger des kurvenäußeren Rades verbunden ist.

Aus EP 2 336 005 A1 ist eine Anordnung von Stelleinheiten zum Lenken und zur Wankstabilisierung eines von einer Radaufhängung getragenen Fahrzeugrads bekannt. Die Radaufhängung ist über untere Lenker an einem mit dem Aufbau des Kraftfahrzeuges verbundenen Achsträger angelenkt. Der Achsträger weist seitliche Längsträger und diese verbindende Querträger auf. Die Lenkungs-Stelleinheit ist mit auf Radführungselemente wirkenden Spurstangen an einen Querträger des Achsträgers und die Wankstabilisierungs-Stelleinheit ist mit auf Radführungselemente wirkenden, geteilten Querstabilisatoren an dem anderen Querträger des Achsträgers angeordnet und befestigt.

Aus US 2010/0164189 A1 offenbart ein Stabilisierungssystem für ein Fahrzeug, mit einem Querlenker, welcher ein Rad und eine Karosserie bzw. einen Aufbau des Fahrzeugs verbindet. Das Stabilisierungssystem weist eine Stabilisierungsstange auf, die einen Drehstabschnitt und einen Armabschnitt hat, der sich von dem Drehstababschnitt in eine zu dem Drehstababschnitt nicht-parallele Richtung erstreckt. Das Stabilisierungssystem weist außerdem ein Stellglied auf, welches konfiguriert ist, die Stabilisierungsstange um eine Achse des Drehstababschnitts zu drehen. Das Stabilisierungssystem weist außerdem eine Verbindungsstange auf, die den Querlenker und dasjenige der entgegengesetzten Enden des Armabschnitts verbindet, das von dem Drehstababschnitt entfernt ist, wobei die Stabilisierungsstange eine Stabilisierungskraft erzeugt, die von einer Reaktion abhängt, die als ein Resultat von Torsion des Drehstababschnitts erzeugt wird, und die das Rad und den Aufbau in eine ausgewählte Richtung aufeinander zu oder voneinander weg drängt, wobei das Stellglied der Stabilisierungsstange erlaubt, die Stabilisierungskraft, deren Größe durch Betätigung des Stellgliedes veränderbar ist, zu erzeugen. Die Verbindungsstange ist mit Bezug auf den Querlenker, mit dem die Verbindungstange verbunden ist, geneigt, so dass ein Winkel, der durch die Verbindungsstange und den Querlenker bestimmt wird, nicht 90° ist, und so, dass eine axiale Kraft als Komponente der Stabilisierungskraft in einer axialen Richtung des Querlenkers auf den Querlenker in eine die Untersteuerungsneigung erhöhende Richtung wirkt, welche mindestens einen Spurwinkel oder einen Sturzwinkel des Rads in einer Weise verändern lässt, die eine Untersteuerungsneigung als eine Kurvenfahrtscharakteristik des Fahrzeugs erhöht.

Es ist die Aufgabe der vorliegenden Erfindung, ein Verfahren anzugeben, mittels dem auf einfache Weise ein verbessertes Kurvenfahrverhalten erzielbar ist.

Die Aufgabe wird durch ein Verfahren gelöst, das dadurch gekennzeichnet ist, dass mittels wenigstens einer aktiven Stellvorrichtung, die wenigstens einen Aktuator beinhaltet, bei einer Kurvenfahrt sowohl auf das kurvenäußere, als auch das kurveninnere Rad einer Fahrzeugachse eine in Richtung auf die Fahrbahn gerichtete Kraft ausgeübt wird oder sowohl auf das kurvenäußere, als auch das kurveninnere Rad einer Fahrzeugachse eine von der Fahrbahn weg gerichtete Kraft ausgeübt wird.

Es ist eine weitere Aufgabe der vorliegenden Erfindung, ein aktives Fahrwerk anzugeben, das auf einfache Weise ein verbessertes Kurvenfahrverhalten ermöglicht.

Die Aufgabe wird durch ein aktives Fahrwerk gelöst, das dadurch gekennzeichnet ist, dass eine Steuerungsvorrichtung die Stellvorrichtung derart steuert, dass der Aktuator bei einer Kurvenfahrt sowohl auf das kurvenäußere, als auch das kurveninnere Rad einer Fahrzeugachse eine in Richtung auf die Fahrbahn gerichtete Kraft ausübt, oder dass eine Steuerungsvorrichtung die Stellvorrichtung derart steuert, dass der Aktuator bei einer Kurvenfahrt sowohl auf das kurvenäußere, als auch das kurveninnere Rad einer Fahrzeugachse eine von der Fahrbahn weg gerichtete Kraft ausübt.

In erfindungsgemäßer Weise wurde erkannt, dass eine Verbesserung des Kurvenfahrverhaltens - anders als bei den aus dem Stand der Technik bekannten Wankstabilisierungssystemen, bei denen auf das kurvenäußere Rad eine zusätzliche Kraft in Richtung auf die Fahrbahn ausgeübt wird, während auf das kurveninnere Rad eine von der Fahrbahn weg gerichtete Kraft ausgeübt wird - auch dann erreicht werden kann, wenn auf beide Räder einer Fahrzeugachse zusätzliche, gleichgerichtete Kräfte ausgeübt werden. Hintergrund ist insbesondere, dass die Belastungssituation des kurvenäußeren Rades bei einer Kurvenfahrt hinsichtlich des Kurvenfahrverhaltens eine wichtigere Rolle spielt, als die Belastungssituation des kurveninneren Rades.

Die Erfindung ermöglicht insoweit eine Verbesserung des Kurvenfahrverhaltens, wobei in unaufwändiger und bauraumsparender Weise auf komplizierte Systeme, wie geteilte Stabilisatoren, die gegeneinander verdreht werden oder auf radindividuelle Aktuatoren verzichtet werden kann. Vielmehr kann die vorliegende Erfindung vorteilhafter Weise derart realisiert werden, dass ein durchgehender Stabilisator, der an beide Radaufhängungen einer Fahrzeugachse angebunden ist, mittels wenigstens eines Aktuators bei einer Kurvenfahrt mit einem zusätzlichen Drehmoment beaufschlagt wird, um die oben genannten Kräfte auszuüben. Ein durchgehender Stabilisator kann hierbei einstückig aus einem Teil gefertigt sein oder durchaus auch aus mehreren Teilen zusammengesetzt sein. Insbesondere kann ein durchgehender Stabilisator derart ausgebildet sein, dass er von von einem Ankopplungspunkt der linken Radaufhängung zu einem Ankopplungspunkt der rechten Radaufhängung verläuft und alle im Torsionsfluss liegenden Bauteile beinhaltet. Beispielsweise kann ein durchgehender Stabilisator einen Drehstab beinhalten, an dessen Enden jeweils ein Hebelarm drehfest angeordnet ist.

Eine solche Ausführung hat darüber hinaus den weiteren Vorteil, dass sie gleichzeitig auch eine Nickstabilisierung ermöglicht, um Bewegungen des Fahrzeugs um die Fahrzeugquerachse beim Beschleunigen oder beim Verzögern zu vermeiden oder wenigstens zu vermindern.

Allerdings ist es dennoch vorteilhaft möglich, die Erfindung auch mit einem System auszuführen, bei dem jedem Rad individuell ein eigener Aktuator zugeordnet ist, die unabhängig voneinander steuerbar sind.

Insbesondere kann das erfindungsgemäße Verfahren vorteilhaft in der Weise umgesetzt werden, dass die bei einer Kurvenfahrt sowohl auf das kurvenäußere, als auch das kurveninnere Rad einer Fahrzeugachse in Richtung auf die Fahrbahn gerichteten Kräfte zusätzlich zu einer bei, insbesondere beschleunigungs- und verzögerungsfreier, Geradeausfahrt ausgeübten Kraft ausgeübt wird. Alternativ oder zusätzlich kann vorgesehen sein, dass die bei einer Kurvenfahrt sowohl auf das kurvenäußere, als auch das kurveninnere Rad einer Fahrzeugachse in Richtung auf die Fahrbahn gerichteten Kräfte bei Geradeausfahrt oder bei beschleunigungs- und verzögerungsfreier Geradeausfahrt und/oder bei nicht ausgeübt wird.

Es ist alternativ hierzu auch möglich das erfindungsgemäße Verfahren in der Weise umzusetzen, dass die bei einer Kurvenfahrt sowohl auf das kurvenäußere, als auch das kurveninnere Rad einer Fahrzeugachse die von der Fahrbahn weg gerichtete Kraft zusätzlich zu einer bei Geradeausfahrt ausgeübten Kraft ausgeübt wird oder zusätzlich zu einer bei beschleunigungs- und verzögerungsfreier Geradeausfahrt auf das kurvenäußere und das kurveninnere Rad ausgeübten Kraft ausgeübt wird. Alternativ oder zusätzlich hierzu kann vorgesehen sein, dass die bei einer Kurvenfahrt sowohl auf das kurvenäußere, als auch das kurveninnere Rad einer Fahrzeugachse in Richtung von der Fahrbahn weg gerichtete Kraft bei Geradeausfahrt oder bei beschleunigungs- und verzögerungsfreier Geradeausfahrt nicht ausgeübt wird.

Ganz allgemein kann die Stellvorrichtung einen Drehstab beinhalten, auf den mittels des Aktuators bei einem Stellvorgang ein Drehmoment ausgeübt wird. Der Drehstab kann insbesondere Teil eines Stabilisators sein, der an beide Radaufhängungen einer Fahrzeugachse angekoppelt ist. Insbesondere kann der Drehstab der elastisch tordierbare Mittelteil eines Stabilisators sein, wobei sich an den Mittelteil endseitig jeweils ein Hebelarm zur Ankopplung an jeweils einen Lenker einer Radaufhängung anschließen kann.

Vorzugsweise wird bei einer Kurvenfahrt sowohl auf alle kurvenäußeren Räder (also die kurvenäußeren Räder der Vorderachse und der Hinterachse), als auch auf alle kurveninneren Räder (also die kurveninneren Räder der Vorderachse und der Hinterachse) eines Fahrzeugs jeweils eine in Richtung auf die Fahrbahn gerichtete Kraft ausgeübt. Alternativ ist es auch möglich, dass bei einer Kurvenfahrt sowohl auf alle kurvenäußeren, als auch auf alle kurveninneren Räder eines Fahrzeugs jeweils eine von der Fahrbahn weg gerichtete Kraft ausgeübt wird. Es ist allerdings auch möglich, dass beispielweise lediglich eine Fahrzeugachse, insbesondere eine Hinterachse, die Stellvorrichtung aufweist, so dass bei einer Kurvenfahrt lediglich auf die Räder der Hinterachse gleichgerichtete zusätzliche Kräfte ausgeübt werden.

Bei einer einfachen Ausführung weist der Aktuator einen, insbesondere elektrischen, Antriebsmotor und ein dem Antriebsmotor triebtechnisch nachgeschaltetes Getriebe auf. Insbesondere kann vorteilhaft vorgesehen sein, dass der Antriebsmotor und das Getriebe koaxial zueinander angeordnet sind. Bei dem Getriebe kann es sich vorteilhaft um ein Spannungswellengetriebe handeln. Ein Spannungswellengetriebe hat einerseits den Vorteil, dass es auf einfache Weise eine koaxiale Anbindung ermöglicht. Darüber hinaus hat ein Spannungswellengetriebe den besonderen Vorteil, dass es spielfrei arbeitet und damit ein besonders präzises Einstellen ermöglicht.

Bei einer ganz besonders kompakten Ausführung weist der Aktuator einen Antriebsmotor auf, dem zwei parallel geschaltete Getriebe triebtechnisch nachgeschaltet sind. Eine solche Ausführung hat den besonderen Vorteil, dass der Aktuator in radialer Richtung besonders bauraumsparend ausgebildet werden kann. Dies insbesondere deshalb, weil sich die Gesamtbelastung auf die beiden Getriebe aufteilt, so dass diese jeweils für eine geringere Belastung ausgelegt und daher kleiner ausgebildet sein können. Insbesondere können die Getriebe in radialer Richtung besonders kompakt ausgebildet sein. Insoweit benötigt eine solche Ausführung, insbesondere in radialer Richtung, einen besonders kleinen Bauraum.

Die Anbindung eines Antriebsmotors an zwei Getriebe kann beispielsweise dadurch realisiert werden, dass der Antriebsmotor über eine Zwischenwelle gleichzeitig zwei Getriebe antreibt, deren Abtriebe drehfest mit dem Drehstab verbunden sind. Auch bei einer solchen Ausführung kann vorteilhaft vorgesehen sein, dass die beiden Getriebe koaxial zu dem Drehstab angeordnet sind.

Bei den beiden Getrieben kann es sich darüber hinaus in vorteilhafter Weise um Spannungswellengetriebe handeln.

Die Zwischenwelle ist bei einer besonders kompakten Ausführung koaxial zu dem Drehstab angeordnet. Insbesondere kann die Zwischenwelle vorteilhaft als Hohlwelle ausgebildet sein, durch die hindurch der Drehstab verläuft.

Vorzugsweise ist die Zwischenwelle weniger torsionssteif ausgebildet, als der zwischen den Ankoppelstellen der beiden Getriebe liegende Teil des Drehstabs, um eine stets weitgehend gleichmäßige Verteilung der Belastung auf beide Getriebe zu gewährleisten.

Der Antriebsmotor kann beispielsweise räumlich zwischen den beiden Getrieben angeordnet sein. Dies ermöglicht es in besonders kompakter Bauweise, dass der Antriebsmotor eine Zwischenwelle antreibt, deren Enden an die Antriebe der Getriebe angekoppelt sind oder deren Enden die Antriebe der Getriebe bilden.

Zum Ausüben der erwähnten Kräfte sowohl auf das kurvenäußere, als auch auf das kurveninnerer Rad stützt sich die Stellvorrichtung oder wenigsten ein Teil der Stellvorrichtung vorzugsweise direkt oder indirekt an der Fahrzeugkaroserie ab. Insbesondere kann vorteilhaft vorgesehen sein, dass wenigstens Teile der Stellvorrichtung, insbesondere der Aktuator, drehfest an der Fahrzeugkaroserie befestigt sind.

Um Verspannungen zu vermeiden, kann vorteilhaft vorgesehen sein, dass ein Aktuatorgehäuse des Aktuators, unabhängig davon, ob der Aktuator lediglich ein oder mehrere Getriebe beinhaltet, mittels eines Loslagers gelagert ist. Insbesondere kann das Aktuatorgehäuse des Aktuators einerseits mittels eines Festlagers und zusätzlich an anderer Stelle mittels eines Loslagers beispielsweise an einer Fahrzeugkarosserie befestigt sein. Das Loslager ermöglicht vorzugsweise eine Verschiebbarkeit in Axialrichtung. Die Verwendung eines Loslagers bietet sich insbesondere zur Lagerung eines Aktuators an, der zwei Getriebe beinhaltet, da dessen Gehäuse prinzipbedingt in Axialrichtung relativ lang ausgebildet ist.

Bei einer anderen, vorteilhaften Ausführung beinhaltet die Stellvorrichtung einen Drehstab und zwei Aktuatoren, wobei bei einem Stellvorgang mit beiden Aktuatoren gleichzeitig ein gleichgerichtetes Drehmoment auf den Drehstab ausgeübt wird. Eine solche Ausführung hat den besonderen Vorteil, dass jeder der Aktuatoren, insbesondere in radialer Richtung, besonders kompakt ausgebildet werden kann, da jeder der Aktuatoren schwächer ausgelegt werden kann, als bei einer Ausführung mit einem einzigen Aktuator.

Vorzugsweise werden die Antriebsmotore der beiden Aktuatoren synchron angesteuert.

Bei einer besonderen Ausführung sind die Abtriebe der Aktuatoren an unterschiedlichen Ankoppelstellen an den Drehstab angekoppelt. Hierbei kann insbesondere vorteilhaft vorgesehen sein, dass eine Verdrehung des zwischen den beiden Ankoppelstellen der beiden Getriebe liegende Teils des Drehstabs fortlaufend gemessen wird und bei der Ansteuerung der beiden Aktuatoren berücksichtigt wird. Auf diese Weise wird vorteilhaft vermieden, dass im Betrieb einer der Aktuatoren ganz oder teilweise durch eine Torsion des Drehstabes mechanisch entkoppelt wird. Vielmehr wird auf diese Weise vorteilhaft erreicht, dass das jeweils aufzubringende Drehmoment jeweils in etwa hälftig von jedem der beiden Aktuatoren aufgebracht wird.

Vorzugsweise sind die beiden Aktuatoren triebtechnisch parallel geschaltet.

Bei einer besonders vorteilhaften Ausführung sind die beiden Aktuatoren zueinander spiegelsymmetrisch aufgebaut und/oder angeordnet. Eine solche Ausführung ermöglicht in besonders vorteilhafter Weise die Verwendung von Gleichteilen und insbesondere von zwei gleichen Aktuatoren, die entgegengesetzt ausgerichtet beispielsweise an einen Drehstab eines Stabilisators angekoppelt werden.

Bei einer besonders vorteilhaften Ausführung wird der Ort der Ankopplung des Aktuators an den Drehstab während des Betriebs des Fahrwerks verändert. Insbesondere kann vorteilhaft vorgesehen sein, dass der Ort der Ankopplung eines Getriebes des Aktuators an den Drehstab während des Betriebs des Fahrwerks verändert wird und/oder dass die Orte der Ankopplung mehrerer Getriebe der Stellvorrichtung an den Drehstab während des Betriebs des Fahrwerks verändert werden.

Auf diese Weise ist es beispielsweise vorteilhaft ermöglicht, den Ort der Ankopplung des Aktuators bei einer Kurvenfahrt in Richtung auf das kurvenäußere Rad zu verlagern, so dass im Ergebnis die Länge des tordierbaren Teils des Drehstabs zwischen der Ankopplung und der Radaufhängung des kurvenäußeren Rades verkürzt wird, während die Länge des Teils des Drehstabes zwischen der Ankopplung und dem kurveninneren Rad verlängert wird. Aufgrund der geringeren Tordierbarkeit des verkürzten Teilstücks und aufgrund der erhöhten Tordierbarkeit des verlängerten Teilstücks kann auf diese Weise auf das kurvenäußere Rad im Ergebnis eine etwas größere Kraft ausgeübt werden, als auf das kurveninnere Rad. Dies wirkt sich vorteilhaft auf das Kurvenfahrverhalten aus. Eine Veränderbarkeit des Orts der Ankopplung an den Drehstab kann beispielsweise mittels eines axial verschiebbaren, drehfest mit dem Getriebeabtrieb verbundenen Rings erfolgen, der radial nach innen gerichtete Vorsprünge aufweist, die in axial verlaufenden Nuten des Drehstabs geführt sind.

Wie bereits erwähnt kann die Stellvorrichtung zusätzlich zum Bewirken einer Nickstabilisierung angesteuert werden. Beispielsweise kann mittels der Stellvorrichtung bei einem Bremsvorgang auf die Räder einer Vorderachse relativ zu einer Karosserie jeweils eine in Richtung auf die Fahrbahn gerichtete Kraft ausgeübt werden, um ein Absenken den Fahrzeugbugs zu vermeiden. Gleichzeitig kann das Fahrzeugheck über eine entsprechend entgegengerichtete Ansteuerung der Stellvorrichtung einer Hinterachse bei einem Bremsvorgang abgesenkt werden. Bei einem Beschleunigungsvorgang kann vorteilhaft eine umgekehrte Ansteuerung der Stellvorrichtungen von Vorder- und Hinterachse erfolgen.

Von besonderem Vorteil ist ein Fahrzeug, das ein erfindungsgemäßes Fahrwerk beinhaltet.

In der Zeichnung ist der Erfindungsgegenstand beispielhaft und schematisch dargestellt und wird anhand der Figuren nachfolgend beschrieben, wobei gleiche oder gleich wirkende Elemente auch in unterschiedlichen Ausführungsbeispielen zumeist mit denselben Bezugszeichen versehen sind. Dabei zeigen:
Fig. 1 ein Ausführungsbeispiel eines Fahrzeugs, das ein erfindungsgemäßes Fahrwerk aufweist,
Fig. 2 eine Detailansicht eines Ausführungsbeispiels eines erfindungsgemäßen Fahrwerks,
Fig. 3 eine Detailansicht eines anderen Ausführungsbeispiels eines erfindungsgemäßen Fahrwerks, und
Fig. 4 eine Detailansicht eines weiteren Ausführungsbeispiels eines erfindungsgemäßen Fahrwerks.

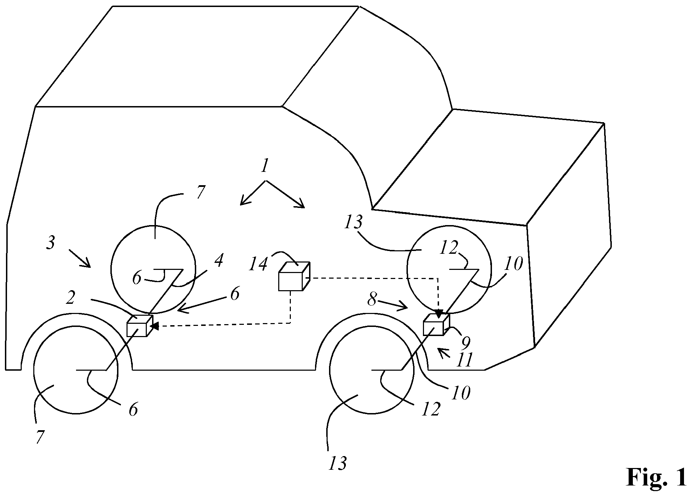

Fig. 1 zeigt ein Ausführungsbeispiel eines Fahrzeugs, das ein erfindungsgemäßes aktives Fahrwerk 1 aufweist.

Das aktive Fahrwerk 1 beinhaltet eine erste Stellvorrichtung 3, die einen ersten Aktuator 2 beinhaltet. Ein Aktuatorgehäuse des ersten Aktuators 2 ist drehfest mit der Fahrzeugkarosserie verbunden. Der erste Aktuator 2 ist außerdem an einen ersten Drehstab 4 angekoppelt, der den Mittelteil eines ungeteilten, hinteren Stabilisators 5 einer Hinterachse des Fahrzeugs bildet. An den Enden des ersten Drehstabs 4 ist jeweils ein Hebel 6 angeordnet. Die Hebel 6 sind an in dieser Figur nicht dargestellte Lenker der Radaufhängungen der Hinterachse angekoppelt. Durch Rotieren des Drehstabes 4 mittels des ersten Aktuators 2 kann eine zusätzliche, sich an der Fahrzeugkarosserie abstützende Kraft auf die Hinterräder 7 ausgeübt werden und so der Höhenstand der Fahrzeugkarosserie relativ zu den Hinterrädern 7 verändert werden.

Das aktive Fahrwerk 1 beinhaltet außerdem eine zweite Stellvorrichtung 8, die einen zweiten Aktuator 9 beinhaltet. Ein Aktuatorgehäuse des zweiten Aktuators 9 ist drehfest mit der Fahrzeugkarosserie verbunden. Der zweite Aktuator 2 ist außerdem an einen zweiten Drehstab 10 angekoppelt, der den Mittelteil eines vorderen, ungeteilten Stabilisators 11 einer Vorderachse des Fahrzeugs bildet. An den Enden des zweiten Drehstabs 10 ist jeweils ein Hebel 12 angeordnet. Die Hebel 12 sind an in dieser Figur nicht dargestellte Lenker der Radaufhängungen der Vorderachse angekoppelt. Durch Rotieren des Drehstabes 10 mittels des zweiten Aktuators 9 kann eine zusätzliche, sich an der Fahrzeugkarosserie abstützende Kraft auf die Vorderräder 13 ausgeübt werden und so der Höhenstand der Fahrzeugkarosserie relativ zu den Vorderrädern 13 verändert werden.

Die Radaufhängungen der Vorder- und der Hinterachse beinhalten eigene (nicht dargestellte) Federn, über die das Gewicht der Karosserie abgestützt ist.

Das Fahrwerk weist eine Steuerungsvorrichtung 14 auf, die die Stellvorrichtungen 3, 8 derart steuert, dass die Aktuatoren 2, 9 durch drehen der Stabilisatoren 6, 11 bei einer Kurvenfahrt sowohl auf das kurvenäußere, als auch das kurveninnere Rad ihrer Fahrzeugachse eine in Richtung auf die Fahrbahn gerichtete Kraft ausüben oder sowohl auf das kurvenäußere, als auch das kurveninnere Rad ihrer Fahrzeugachse eine von der Fahrbahn weg gerichtete Kraft ausüben.

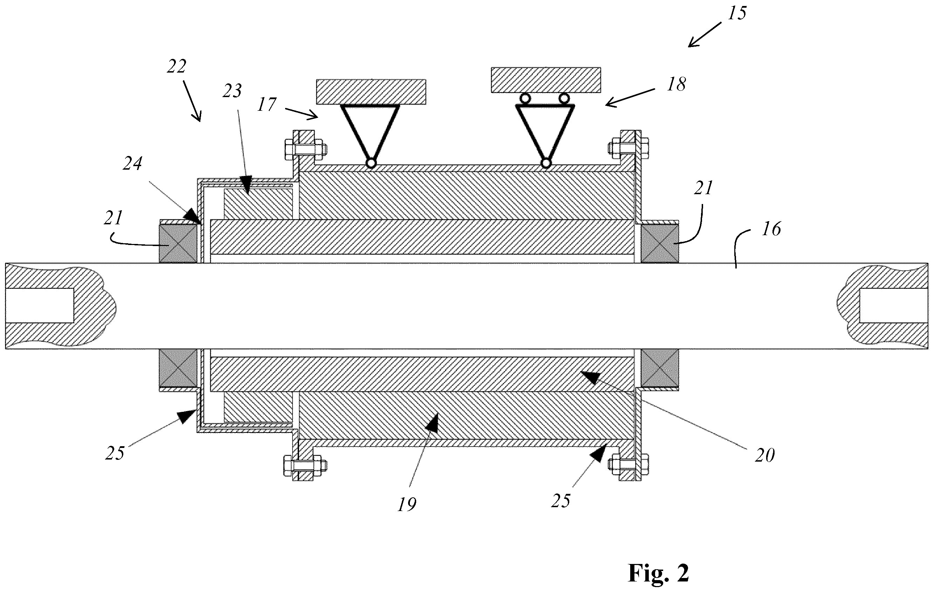

Fig. 2 zeigt eine Detailansicht eines Ausführungsbeispiels eines erfindungsgemäßen Fahrwerks.

Das Fahrwerk beinhaltet einen Aktuator 15, der koaxial zu einem Drehstab 16 angeordnet ist. Der Aktuator 15 weist ein Aktuatorgehäuse 25 auf, das mittels eines Festlagers 17 und darüber hinaus mittels eines Loslagers 18 an einer Fahrzeugkarosserie befestigt ist. Der Aktuator 15 beinhaltet einen Antriebsmotor 19, der eine Hohlwelle 20 zur Rotation antreibt. Durch die Hohlwelle 20 hindurch verläuft der Drehstab 16.

Der Drehstab 16 ist mittels zweier Wälzlager 21 relativ zu dem Aktuatorgehäuse 25 drehbar gelagert.

Dem Antriebsmotor 19 ist ein Spannungswellengetriebe 22 triebtechnisch nachgeschaltet. Die Hohlwelle 20 treibt einen Wellengenerator 23 des Spannungswellengetriebes 22 zur Rotation an. Der Abtrieb des Spannungswellengetriebes 22 ist durch einen Flextopf 24 gebildet, der drehfest mit dem Drehstab 16 verbunden ist. Die Ankopplung des Flextopfs 24 an den Drehstab 16 kann insbesondere in der Mitte des Drehstabes 16 angeordnet sein.

Das Spannungswellengetriebe 22 beinhaltet weitere Bauteile, wie insbesondere einen gehäusefesten Circularspline und ein radialflexibles Wälzlager, die der besseren Übersichtlichkeit halber nicht eingezeichnet sind.

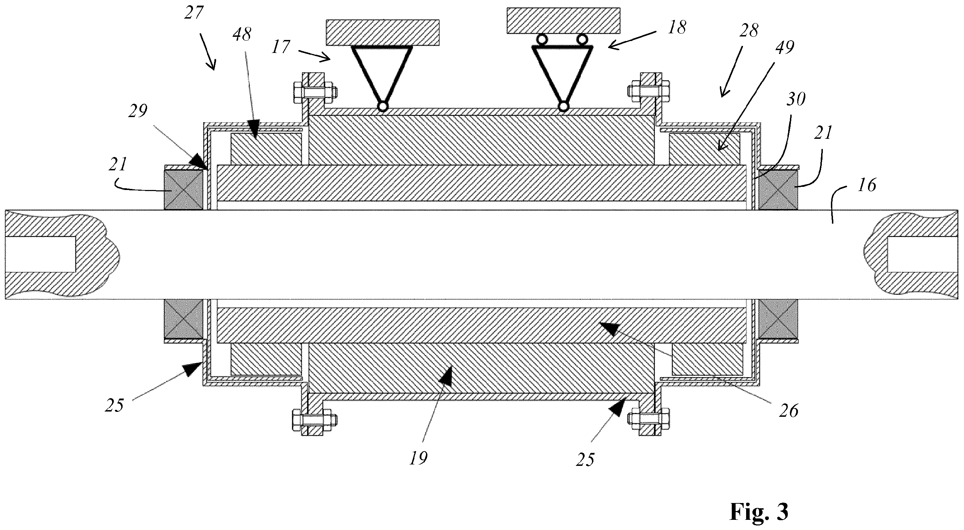

Figur 3 zeigt eine Detailansicht eines anderen Ausführungsbeispiels eines erfindungsgemäßen Fahrwerks.

Bei diesem Ausführungsbeispiel treibt der Antriebsmotor 19 über eine Zwischenwelle 26 gleichzeitig ein erstes Getriebe 27 und ein zweites Getriebe 28 an. Sowohl das erste Getriebe 27, als auch das zweite Getriebe 28 sind jeweils als Spannungswellengetriebe ausgebildet. Konkret wird jeweils der Wellengenerator 48, 49 der beiden Spannungswellengetriebe über die Zwischenwelle 26 zur Rotation angetrieben.

Die Flextöpfe 29, 30 der beiden Getriebe 27, 28 sind drehfest an dem Drehstab 16 angeordnet. Der Antriebsmotor 19 ist räumlich zwischen den beiden Getrieben 27, 28 angeordnet.

Der Aktuator 1 ist einerseits mittels eines Loslagers 18 in axialer Richtung verschiebbar, und mittels eines Festlagers 17 an einer Fahrzeugkarosserie gelagert. Darüber hinaus ist der Drehstab 16 relativ zu dem Aktuatorgehäuse 25 mittels zweier Wälzlager 21 drehbar gelagert.

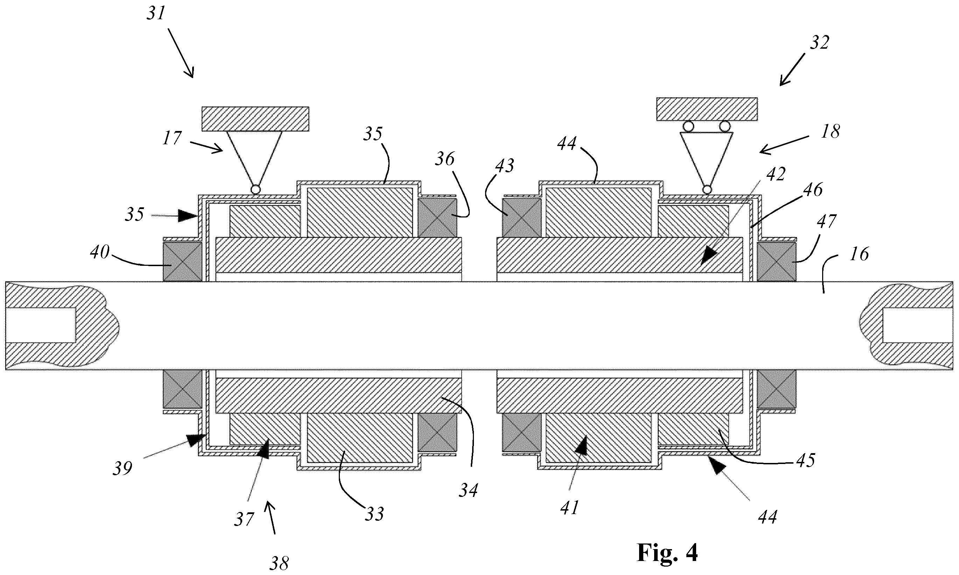

Figur 4 zeigt eine Detailansicht eines weiteren Ausführungsbeispiels eines erfindungsgemäßen Fahrwerks.

Bei diesem Ausführungsbeispiel ist der Drehstab 16 sowohl an einem ersten Aktuator 31, als auch an einem zweiten Aktuator 32 angekoppelt. Der erste Aktuator 31 ist mittels eines Festlagers 17 relativ zu einer Fahrzeugkarosserie gelagert. Der zweite Aktuator 32 ist mittels eines Loslagers, axial verschiebbar, relativ zu einer Fahrzeugkarosserie gelagert.

Der erste Aktuator 31 und der zweite Aktuator 32 sind gleich aufgebaut, jedoch spiegelsymmetrisch zueinander angeordnet. Der erste Aktuator 31 beinhaltet einen ersten Antriebsmotor 33, der eine erste Hohlwelle 34 zur Rotation antreibt. Die Hohlwelle 34 ist relativ zu einem ersten Aktuatorgehäuse 35 mittels eines Wälzlagers 36 drehbar gelagert. Die erste Hohlwelle 34 ist drehfest mit dem Wellengenerator 37 eines ersten Spannungswellengetriebes 38 verbunden. Der Flextopf 39 des ersten Spannungswellengetriebes 38 fungiert als Abtrieb und ist drehfest mit dem Drehstab 16 verbunden. Der Drehstab 16 ist mittels eines weiteren Wälzlagers 40 relativ zu dem ersten Aktuatorgehäuse 35 drehbar gelagert.

Der zweite Aktuator 32 beinhaltet einen zweiten Antriebsmotor 41, der eine zweite Hohlwelle 42 zur Rotation antreibt. Die zweite Hohlwelle 42 ist mittels eins Wälzlagers 43 relativ zu einem zweiten Aktuatorgehäuse 44 drehbar gelagert. Der zweite Aktuator 32 beinhaltet ein zweites Spannungswellengetriebe 50, dessen Wellengenerator 45 über die zweite Hohlwelle 42 angetrieben wird. Der Flextopf 46 dient als Abtrieb und ist drehfest mit dem Drehstab 16 verbunden. Der Drehstab 16 ist außerdem mittels eines weiteren Wälzlagers 47 relativ zu dem zweiten Aktuatorgehäuse 44 drehbar gelagert.

### Bezugszeichenliste:

- 1: Aktives Fahrwerk
- 2: erster Aktuator
- 3: erste Stellvorrichtung
- 4: erster Drehstab
- 5: hinterer Stabilisator
- 6: Hebel
- 7: Hinterräder
- 8: zweite Stellvorrichtung
- 9: zweiter Aktuator
- 10: zweiter Drehstab
- 11: vorderer Stabilisator
- 12: Hebel
- 13: Vorderräder
- 14: Steuerungsvorrichtung
- 15: Aktuator
- 16: Drehstab
- 17: Festlager
- 18: Loslager
- 19: Antriebsmotor
- 20: Hohlwelle
- 21: Wälzlager
- 22: Spannungswellengetriebe
- 23: Wellengenerator
- 24: Flextopf
- 25: Aktuatorgehäuse
- 26: Zwischenwelle
- 27: Erstes Getriebe
- 28: Zweites Getriebe
- 29: Flextopf
- 30: Flextopf
- 31: Erster Aktuator
- 32: Zweiter Aktuator
- 33: Erster Antriebsmotor
- 34: Erste Hohlwelle
- 35: Erstes Aktuatorgehäuse
- 36: Wälzlager
- 37: Wellengenerator
- 38: Erstes Spannungswellengetriebe
- 39: Flextopf
- 40: Wälzlager
- 41: Zweiter Antriebsmotor
- 42: Zweite Hohlwelle
- 43: Wälzlager
- 44: Zweites Aktuatorgehäuse
- 45: Wellengenerator
- 46: Flextopf
- 47: Wälzlager
- 48: Wellengenerator
- 49: Wellengenerator
- 50: Zweites Spannungswellengetriebe

## Patentansprüche

1. Verfahren zur Steuerung eines aktiven Fahrwerks (1) eines Fahrzeugs, **dadurch gekennzeichnet, dass** mittels wenigstens einer aktiven Stellvorrichtung (3, 8), die wenigstens einen Aktuator (2, 9, 15, 31, 32) beinhaltet, bei einer Kurvenfahrt sowohl auf das kurvenäußere, als auch das kurveninnere Rad einer Fahrzeugachse eine in Richtung auf die Fahrbahn gerichtete Kraft ausgeübt wird oder sowohl auf das kurvenäußere, als auch das kurveninnere Rad einer Fahrzeugachse eine von der Fahrbahn weg gerichtete Kraft ausgeübt wird

2. Verfahren nach Anspruch 1, **dadurch gekennzeichnet, dass**
a. die Stellvorrichtung (3, 8) einen Drehstab (4, 10) beinhaltet, auf den mittels des Aktuators (2, 9, 15, 31, 32) bei einem Stellvorgang ein Drehmoment ausgeübt wird, und/oder dass
b. der Aktuator (2, 9, 15, 31, 32) einen, insbesondere elektrischen, Antriebsmotor und ein dem Antriebsmotor triebtechnisch nachgeschaltetes Getriebe (22, 27, 28, 38, 50) aufweist.

3. Verfahren nach Anspruch 1 oder 2, **dadurch gekennzeichnet, dass**
a. bei einer Kurvenfahrt sowohl auf alle kurvenäußeren, als auch auf alle kurveninneren Räder eines Fahrzeugs jeweils eine in Richtung auf die Fahrbahn gerichtete Kraft ausgeübt wird oder dass
b. bei einer Kurvenfahrt sowohl auf alle kurvenäußeren, als auch auf alle kurveninneren Räder eines Fahrzeugs jeweils eine von der Fahrbahn weg gerichtete Kraft ausgeübt wird.

4. Verfahren nach einem der Ansprüche 1 bis 3, **dadurch gekennzeichnet, dass**
a. der Aktuator (2, 9, 15, 31, 32) einen Antriebsmotor aufweist, dem zwei parallel geschaltete Getriebe triebtechnisch nachgeschaltet sind, und/oder dass
b. der Aktuator (2, 9, 15, 31, 32) einen Antriebsmotor aufweist, der über eine Zwischenwelle gleichzeitig zwei Getriebe antreibt, deren Abtriebe drehfest mit dem Drehstab (16) verbunden sind, und/oder dass
c. der Aktuator (2, 9, 15, 31, 32) einen Antriebsmotor aufweist, der über eine Zwischenwelle gleichzeitig zwei Getriebe antreibt, deren Abtriebe drehfest mit dem Drehstab (16) verbunden sind, wobei die Zwischenwelle koaxial zu dem Drehstab (16) angeordnet ist, und/oder dass
d. der Aktuator (2, 9, 15, 31, 32) einen Antriebsmotor aufweist, der über eine Zwischenwelle gleichzeitig zwei Getriebe antreibt, deren Abtriebe drehfest mit dem Drehstab (16) verbunden sind, wobei die Zwischenwelle weniger torsionssteif ausgebildet ist, als der zwischen den Ankoppelstellen der beiden Getriebe liegende Teil des Drehstabs.

5. Verfahren nach einem der Ansprüche 1 bis 3, **dadurch gekennzeichnet, dass**
a. die Stellvorrichtung einen Drehstab (16) und zwei Aktuatoren (31, 32) beinhaltet, wobei bei einem Stellvorgang mit beiden Aktuatoren (31, 32) gleichzeitig ein gleichgerichtetes Drehmoment auf den Drehstab (16) ausgeübt wird, und/oder dass
b. die Stellvorrichtung einen Drehstab (16) und zwei Aktuatoren (31, 32) beinhaltet, wobei bei einem Stellvorgang mit beiden Aktuatoren (31, 32) gleichzeitig ein gleichgerichtetes Drehmoment auf den Drehstab (16) ausgeübt wird, wobei die beiden Aktuatoren (31, 32) triebtechnisch parallel geschaltet sind, und/oder dass
c. die Stellvorrichtung einen Drehstab (16) und zwei Aktuatoren (31, 32) beinhaltet, wobei bei einem Stellvorgang mit beiden Aktuatoren (31, 32) gleichzeitig ein gleichgerichtetes Drehmoment auf den Drehstab (16) ausgeübt wird, wobei die beiden Aktuatoren (31, 32) zueinander spiegelsymmetrisch aufgebaut und/oder angeordnet sind, und/oder dass
d. die Stellvorrichtung einen Drehstab (16) und zwei Aktuatoren (31, 32) beinhaltet, wobei bei einem Stellvorgang mit beiden Aktuatoren (31, 32) gleichzeitig ein gleichgerichtetes Drehmoment auf den Drehstab (16) ausgeübt wird, wobei die Antriebsmotore (33, 41) der beiden Aktuatoren (31, 32) synchron angesteuert werden, und/oder dass
e. die Stellvorrichtung einen Drehstab (16) und zwei Aktuatoren (31, 32) beinhaltet, wobei bei einem Stellvorgang mit beiden Aktuatoren (31, 32) gleichzeitig ein gleichgerichtetes Drehmoment auf den Drehstab (16) ausgeübt wird, wobei die Abtriebe der Aktuatoren (31, 32) an unterschiedlichen Ankoppelstellen an den Drehstab (16) angekoppelt sind, und/oder dass
f. die Stellvorrichtung einen Drehstab (16) und zwei Aktuatoren (31, 32) beinhaltet, wobei bei einem Stellvorgang mit beiden Aktuatoren (31, 32) gleichzeitig ein gleichgerichtetes Drehmoment auf den Drehstab (16) ausgeübt wird, wobei eine Verdrehung des zwischen den beiden Ankoppelstellen der beiden Getriebe liegende Teils des Drehstabs (16) fortlaufend gemessen wird und bei der Ansteuerung der beiden Aktuatoren (31, 32) berücksichtigt wird.

6. Verfahren nach einem der Ansprüche 1 bis 5, **dadurch gekennzeichnet, dass**
a. die bei einer Kurvenfahrt sowohl auf das kurvenäußere, als auch das kurveninnere Rad einer Fahrzeugachse die in Richtung auf die Fahrbahn gerichtete Kraft zusätzlich zu einer bei Geradeausfahrt ausgeübten Kraft ausgeübt wird oder zusätzlich zu einer bei beschleunigungs- und verzögerungsfreier Geradeausfahrt auf das kurvenäußere und das kurveninnere Rad ausgeübten Kraft ausgeübt wird, oder dass
b. die bei einer Kurvenfahrt sowohl auf das kurvenäußere, als auch das kurveninnere Rad einer Fahrzeugachse von der Fahrbahn weg gerichtete Kraft zusätzlich zu einer bei Geradeausfahrt ausgeübten Kraft ausgeübt wird oder zusätzlich zu einer bei beschleunigungs- und verzögerungsfreier Geradeausfahrt auf das kurvenäußere und das kurveninnere Rad ausgeübten Kraft ausgeübt wird, oder dass
c. die bei einer Kurvenfahrt sowohl auf das kurvenäußere, als auch das kurveninnere Rad einer Fahrzeugachse in Richtung auf die Fahrbahn gerichtete Kraft bei Geradeausfahrt oder bei beschleunigungs- und verzögerungsfreier Geradeausfahrt nicht ausgeübt wird, oder dass
d. die bei einer Kurvenfahrt sowohl auf das kurvenäußere, als auch das kurveninnere Rad einer Fahrzeugachse in Richtung von der Fahrbahn weg gerichtete Kraft bei Geradeausfahrt oder bei beschleunigungs- und verzögerungsfreier Geradeausfahrt nicht ausgeübt wird.

7. Verfahren nach einem der Ansprüche 1 bis 6, **dadurch gekennzeichnet, dass**
a. die Stellvorrichtung (3, 8) zusätzlich zum Bewirken einer Nickstabilisierung angesteuert wird, und/oder dass
b. der Ort der Ankopplung des Aktuators (2, 9, 15, 31, 32) an den Drehstab (16) während des Betriebs des Fahrwerks (1) verändert wird und/oder dass
c. der Ort der Ankopplung eines Getriebes des Aktuators (2, 9, 15, 31, 32) an den Drehstab (16) während des Betriebs des Fahrwerks (1) verändert wird und/oder dass
d. die Orte der Ankopplung mehrerer Getriebe (22, 27, 28, 38, 50) der Stellvorrichtung (3, 8) an den Drehstab (16) während des Betriebs des Fahrwerks (1) verändert werden.

8. Aktives Fahrwerk (1) mit einer Stellvorrichtung (3, 8), die wenigstens einen Aktuator (2, 9, 15, 31, 32) beinhaltet, **dadurch gekennzeichnet, dass** eine Steuerungsvorrichtung (14) die Stellvorrichtung (3, 8) derart steuert, dass der Aktuator (2, 9, 15, 31, 32) bei einer Kurvenfahrt sowohl auf das kurvenäußere, als auch das kurveninnere Rad einer Fahrzeugachse eine in Richtung auf die Fahrbahn gerichtete Kraft ausübt, oder dass eine Steuerungsvorrichtung (14) die Stellvorrichtung (3, 8) derart steuert, dass der Aktuator (2, 9, 15, 31, 32) bei einer Kurvenfahrt sowohl auf das kurvenäußere, als auch das kurveninnere Rad einer Fahrzeugachse eine von der Fahrbahn weg gerichtete Kraft ausübt.

9. Aktives Fahrwerk (1) nach Anspruch 8, **dadurch gekennzeichnet, dass**
a. die Stellvorrichtung (3, 8) einen Drehstab (16) beinhaltet, auf den mittels des Aktuators (2, 9, 15, 31, 32) bei einem Stellvorgang ein Drehmoment ausgeübt wird, und/oder dass
b. der Aktuator (2, 9, 15, 31, 32) einen Antriebsmotor (19, 33, 41) und ein dem Antriebsmotor (19, 33, 41) triebtechnisch nachgeschaltetes Getriebe (22, 27, 28, 38, 50) aufweist.

10. Aktives Fahrwerk (1) nach Anspruch 8 oder 9, **dadurch gekennzeichnet, dass**
a. der Aktuator (2, 9, 15, 31, 32) einen Antriebsmotor (19, 33, 41) aufweist, dem zwei parallel geschaltete Getriebe (17, 28) triebtechnisch nachgeschaltet sind, und/oder dass
b. der Aktuator (2, 9, 15, 31, 32) einen Antriebsmotor (19, 33, 41) aufweist, der über eine Zwischenwelle gleichzeitig zwei Getriebe (27, 28) antreibt, deren Abtriebe drehfest mit dem Drehstab (16) verbunden sind, und/oder dass
c. der Aktuator (2, 9, 15, 31, 32) einen Antriebsmotor (19, 33, 41) aufweist, der über eine Zwischenwelle gleichzeitig zwei Getriebe (27, 28) antreibt, deren Abtriebe drehfest mit dem Drehstab (16) verbunden sind, wobei die Zwischenwelle (26) koaxial zu dem Drehstab (16) angeordnet ist, und/oder dass
d. der Aktuator (2, 9, 15, 31, 32) einen Antriebsmotor (19, 33, 41) aufweist, der über eine Zwischenwelle gleichzeitig zwei Getriebe (27, 28) antreibt, deren Abtriebe drehfest mit dem Drehstab (16) verbunden sind, wobei die Zwischenwelle (26) weniger torsionssteif ausgebildet ist, als der zwischen den Ankoppelstellen der beiden Getriebe (27, 28) liegende Teil des Drehstabs (16).

11. Aktives Fahrwerk (1) nach einem der Ansprüche 8 bis 10, **dadurch gekennzeichnet, dass** ein Aktuatorgehäuse (25, 35) des Aktuators (2, 9, 15, 31, 32) mittels eines Loslagers (17) gelagert ist.

12. Aktives Fahrwerk (1) nach einem der Ansprüche 8 bis 11, **dadurch gekennzeichnet, dass**
a. die Stellvorrichtung (3, 8) einen Drehstab (16) und zwei Aktuatoren (31, 32) beinhaltet, wobei die Aktuatoren (31, 32) bei einem Stellvorgang gleichzeitig ein gleichgerichtetes Drehmoment auf den Drehstab (16) ausüben, und/oder dass
b. die Stellvorrichtung (3, 8) einen Drehstab (16) und zwei Aktuatoren (31, 32) beinhaltet, wobei die Aktuatoren (31, 32) bei einem Stellvorgang gleichzeitig ein gleichgerichtetes Drehmoment auf den Drehstab (16) ausüben, wobei jeder der beiden Aktuatoren (31, 32) einen eigenen Antriebsmotor (33, 41) und ein eigenes, dem Antriebsmotor (33, 41) triebtechnisch nachgeschaltetes Getriebe (38, 50) aufweist, und/oder dass
c. die Stellvorrichtung (3, 8) einen Drehstab (16) und zwei Aktuatoren (31, 32) beinhaltet, wobei die Aktuatoren (31, 32) bei einem Stellvorgang gleichzeitig ein gleichgerichtetes Drehmoment auf den Drehstab (16) ausüben, wobei die beiden Aktuatoren (31, 32) triebtechnisch parallel geschaltet sind, und/oder dass
d. die Stellvorrichtung (3, 8) einen Drehstab (16) und zwei Aktuatoren (31, 32) beinhaltet, wobei die Aktuatoren (31, 32) bei einem Stellvorgang gleichzeitig ein gleichgerichtetes Drehmoment auf den Drehstab (16) ausüben, wobei ein Aktuatorgehäuse (35, 44) eines der Aktuatoren (31, 32) mittels eines Festlagers (18) und ein Aktuatorgehäuse (35, 44) des anderen der Aktuatoren (31, 32) mittels eines Loslagers (17) gelagert ist, und/oder dass
e. die Stellvorrichtung (3, 8) einen Drehstab (16) und zwei Aktuatoren (31, 32) beinhaltet, wobei die Aktuatoren (31, 32) bei einem Stellvorgang gleichzeitig ein gleichgerichtetes Drehmoment auf den Drehstab (16) ausüben, wobei die beiden Aktuatoren (31, 32) zueinander spiegelsymmetrisch aufgebaut und/oder angeordnet sind, und/oder dass
f. die Stellvorrichtung (3, 8) einen Drehstab (16) und zwei Aktuatoren (31, 32) beinhaltet, wobei die Aktuatoren (31, 32) bei einem Stellvorgang gleichzeitig ein gleichgerichtetes Drehmoment auf den Drehstab (16) ausüben, wobei die Steuerungsvorrichtung (14) die Antriebsmotore (33, 41) der beiden Aktuatoren (31, 32) synchron ansteuert, und/oder dass
g. die Stellvorrichtung (3, 8) einen Drehstab (16) und zwei Aktuatoren (31, 32) beinhaltet, wobei die Aktuatoren (31, 32) bei einem Stellvorgang gleichzeitig ein gleichgerichtetes Drehmoment auf den Drehstab (16) ausüben, wobei die Abtriebe der Aktuatoren (31, 32) an unterschiedlichen Ankoppelstellen an den Drehstab (16) angekoppelt sind, und/oder dass
h. die Stellvorrichtung (3, 8) einen Drehstab (16) und zwei Aktuatoren (31, 32) beinhaltet, wobei die Aktuatoren (31, 32) bei einem Stellvorgang gleichzeitig ein gleichgerichtetes Drehmoment auf den Drehstab (16) ausüben, wobei die Abtriebe der Aktuatoren (31, 32) an unterschiedlichen Ankoppelstellen an den Drehstab (16) angekoppelt sind und wobei eine Messvorrichtung vorhanden ist, die Steuerungsvorrichtung (14) eine Verdrehung des zwischen den beiden Ankoppelstellen der beiden Getriebe (38, 50) liegende Teils des Drehstabs (16) misst, und/oder dass
i. die Stellvorrichtung (3, 8) einen Drehstab (16) und zwei Aktuatoren (31, 32) beinhaltet, wobei die Aktuatoren (31, 32) bei einem Stellvorgang gleichzeitig ein gleichgerichtetes Drehmoment auf den Drehstab (16) ausüben, wobei die Abtriebe der Aktuatoren (31, 32) an unterschiedlichen Ankoppelstellen an den Drehstab (16) angekoppelt sind und wobei die Steuerungsvorrichtung (14) eine Verdrehung des zwischen den beiden Ankoppelstellen der beiden Getriebe (38, 50) liegende Teils des Drehstabs (16) bei der Ansteuerung der beiden Aktuatoren (31, 32) berücksichtigt.

13. Aktives Fahrwerk (1) nach einem der Ansprüche 8 bis 12, **dadurch gekennzeichnet, dass**
a. die Steuerungsvorrichtung (14) die Stellvorrichtung (3, 8) derart steuert, dass die bei einer Kurvenfahrt sowohl auf das kurvenäußere, als auch das kurveninnere Rad einer Fahrzeugachse in Richtung auf die Fahrbahn gerichtete Kraft zusätzlich zu einer bei Geradeausfahrt ausgeübten Kraft ausgeübt wird oder zusätzlich zu einer bei beschleunigungs- und verzögerungsfreier Geradeausfahrt auf das kurvenäußere und das kurveninnere Rad ausgeübten Kraft ausgeübt wird, oder dass
b. die Steuerungsvorrichtung (14) die Stellvorrichtung (3, 8) derart steuert, dass die bei einer Kurvenfahrt sowohl auf das kurvenäußere, als auch das kurveninnere Rad einer Fahrzeugachse von der Fahrbahn weg gerichtete Kraft zusätzlich zu einer bei Geradeausfahrt ausgeübten Kraft ausgeübt wird oder zusätzlich zu einer bei beschleunigungs- und verzögerungsfreier Geradeausfahrt auf das kurvenäußere und das kurveninnere Rad ausgeübten Kraft ausgeübt wird, oder dass
c. die Steuerungsvorrichtung (14) die Stellvorrichtung (3, 8) derart steuert, dass die bei einer Kurvenfahrt sowohl auf das kurvenäußere, als auch das kurveninnere Rad einer Fahrzeugachse in Richtung auf die Fahrbahn gerichtete Kraft bei Geradeausfahrt oder bei beschleunigungs- und verzögerungsfreier Geradeausfahrt nicht ausgeübt wird, oder dass
d. die Steuerungsvorrichtung (14) die Stellvorrichtung (3, 8) derart steuert, dass die bei einer Kurvenfahrt sowohl auf das kurvenäußere, als auch das kurveninnere Rad einer Fahrzeugachse von der Fahrbahn weg gerichtete Kraft bei Geradeausfahrt oder bei beschleunigungs- und verzögerungsfreier Geradeausfahrt nicht ausgeübt wird.

14. Aktives Fahrwerk (1) nach einem der Ansprüche 8 bis 13, **dadurch gekennzeichnet, dass**
a. die Steuerungsvorrichtung (14) die Stellvorrichtung (3, 8) zusätzlich zum Bewirken einer Nickstabilisierung ansteuert, und/oder dass
b. der Ort der Ankopplung des Aktuators (2, 9, 15, 31, 32) an den Drehstab (16) während des Betriebs des Fahrwerks (1) veränderbar ist und/oder dass
c. der Ort der Ankopplung eines Getriebes des Aktuators (2, 9, 15, 31, 32) an den Drehstab (16) während des Betriebs des Fahrwerks (1) veränderbar ist und/oder dass
d. die Orte der Ankopplung mehrerer Getriebe (22, 27, 28, 38, 50) der Stellvorrichtung (3, 8) an den Drehstab (16) während des Betriebs des Fahrwerks (1) veränderbar sind.

15. Fahrzeug beinhaltend ein aktives Fahrwerk (1) nach einem der Ansprüche 8 bis 14.

## Claims

1. Method for controlling an active suspension (1) of a vehicle, **characterized in that**, by means of at least one active adjusting device (3, 8), which comprises at least one actuator (2, 9, 15, 31, 32), during cornering, a force directed in the direction of the roadway is exerted both on the corner-outside wheel and on the corner-inside wheel of a vehicle axle, or a force directed away from the roadway is exerted both on the corner-outside wheel and on the corner-inside wheel of a vehicle axle.

2. Method according to Claim 1, **characterized in that**
a. the adjusting device (3, 8) comprises a torsion bar (4, 10) onto which a torque is exerted by means of the actuator (2, 9, 15, 31, 32) during an adjustment process, and/or in that
b. the actuator (2, 9, 15, 31, 32) has an, in particular electric, drive motor and a gearing (22, 27, 28, 38, 50) which is connected downstream of the drive motor in terms of drive.

3. Method according to Claim 1 or 2, **characterized in that**,
a. during cornering, in each case one force directed in the direction of the roadway is exerted both on all corner-outside wheels and on all corner-inside wheels of a vehicle, or in that
b. during cornering, in each case one force directed away from the roadway is exerted both on all corner-outside wheels and on all corner-inside wheels of a vehicle.

4. Method according to any of Claims 1 to 3, **characterized in that**
a. the actuator (2, 9, 15, 31, 32) has a drive motor, downstream of which in terms of drive there are connected two gearings connected in parallel, and/or **in that**
b. the actuator (2, 9, 15, 31, 32) has a drive motor which, via an intermediate shaft, simultaneously drives two gearings, the outputs of which are connected rotationally conjointly to the torsion bar (16), and/or **in that**
c. the actuator (2, 9, 15, 31, 32) has a drive motor which, via an intermediate shaft, simultaneously drives two gearings, the outputs of which are connected rotationally conjointly to the torsion bar (16), wherein the intermediate shaft is arranged coaxially with respect to the torsion bar (16), and/or in that
d. the actuator (2, 9, 15, 31, 32) has a drive motor which, via an intermediate shaft, simultaneously drives two gearings, the outputs of which are connected rotationally conjointly to the torsion bar (16), wherein the intermediate shaft is designed to be less torsionally rigid than that part of the torsion bar which is situated between the coupling points of the two gearings.

5. Method according to any of Claims 1 to 3, **characterized in that**
a. the adjusting device comprises a torsion bar (16) and two actuators (31, 32), wherein, during an adjustment process, the torsion bar (16) is subjected to a co-directional torque by means of both actuators (31, 32) simultaneously, and/or **in that**
b. the adjusting device comprises a torsion bar (16) and two actuators (31, 32), wherein, during an adjustment process, the torsion bar (16) is subjected to a co-directional torque by means of both actuators (31, 32) simultaneously, wherein the two actuators (31, 32) are connected in parallel in terms of drive, and/or **in that**
c. the adjusting device comprises a torsion bar (16) and two actuators (31, 32), wherein, during an adjustment process, the torsion bar (16) is subjected to a co-directional torque by means of both actuators (31, 32) simultaneously, wherein the two actuators (31, 32) are constructed and/or arranged mirror-symmetrically with respect to one another, and/or **in that**
d. the adjusting device comprises a torsion bar (16) and two actuators (31, 32), wherein, during an adjustment process, the torsion bar (16) is subjected to a co-directional torque by means of both actuators (31, 32) simultaneously, wherein the drive motors (33, 41) of the two actuators (31, 32) are activated synchronously, and/or **in that**
e. the adjusting device comprises a torsion bar (16) and two actuators (31, 32), wherein, during an adjustment process, the torsion bar (16) is subjected to a co-directional torque by means of both actuators (31, 32) simultaneously, wherein the drives of the actuators (31, 32) are coupled to the torsion bar (16) at different coupling points, and/or in that
f. the adjusting device comprises a torsion bar (16) and two actuators (31, 32), wherein, during an adjustment process, the torsion bar (16) is subjected to a co-directional torque by means of both actuators (31, 32) simultaneously, wherein a twist of that part of the torsion bar (16) which is situated between the two coupling points of the two gearings is continuously measured and is taken into consideration in the activation of the two actuators (31, 32).

6. Method according to any of Claims 1 to 5, **characterized in that**
a. the force directed in the direction of the roadway both on the corner-outside wheel and on the corner-inside wheel of a vehicle axle during cornering is exerted in addition to a force which is exerted during straight-ahead travel or in addition to a force which is exerted on the corner-outside wheel and on the corner-inside wheel during acceleration-free and deceleration-free straight-ahead travel, or **in that**
b. the force directed away from the roadway both on the corner-outside wheel and on the corner-inside wheel of a vehicle axle during cornering is exerted in addition to a force which is exerted during straight-ahead travel or in addition to a force which is exerted on the corner-outside wheel and on the corner-inside wheel during acceleration-free and deceleration-free straight-ahead travel, or in that
c. the force directed in the direction of the roadway both on the corner-outside wheel and on the corner-inside wheel of a vehicle axle during cornering is not exerted during straight-ahead travel or during acceleration-free and deceleration-free straight-ahead travel, or **in that**
d. the force directed away from the roadway both on the corner-outside wheel and on the corner-inside wheel of a vehicle axle during cornering is not exerted during straight-ahead travel or during acceleration-free and deceleration-free straight-ahead travel.

7. Method according to any of Claims 1 to 6, **characterized in that**
a. the adjusting device (3, 8) is additionally activated so as to effect pitch stabilization, and/or **in that**
b. the location of the coupling of the actuator (2, 9, 15, 31, 32) to the torsion bar (16) is varied during the operation of the suspension (1), and/or **in that**
c. the location of the coupling of a gearing of the actuator (2, 9, 15, 31, 32) to the torsion bar (16) is varied during the operation of the suspension (1), and/or **in that**
d. the locations of the coupling of multiple gearings (22, 27, 28, 38, 50) of the adjusting device (3, 8) to the torsion bar (16) are varied during the operation of the suspension (1).

8. Active suspension (1) having an adjusting device (3, 8) which comprises at least one actuator (2, 9, 15, 31, 32), **characterized in that** a control device (14) controls the adjusting device (3, 8) such that the actuator (2, 9, 15, 31, 32), during cornering, exerts a force directed in the direction of the roadway both on the corner-outside wheel and on the corner-inside wheel of a vehicle axle, or **in that** a control device (14) controls the adjusting device (3, 8) such that the actuator (2, 9, 15, 31, 32), during cornering, exerts a force directed away from the roadway both on the corner-outside wheel and on the corner-inside wheel of a vehicle axle.

9. Active suspension (1) according to Claim 8, **characterized in that**
a. the adjusting device (3, 8) comprises a torsion bar (16) onto which a torque is exerted by means of the actuator (2, 9, 15, 31, 32) during an adjustment process, and/or in that
b. the actuator (2, 9, 15, 31, 32) has a drive motor (19, 33, 41) and a gearing (22, 27, 28, 38, 50) which is connected downstream of the drive motor (19, 33, 41) in terms of drive.

10. Active suspension (1) according to Claim 8 or 9, **characterized in that**
a. the actuator (2, 9, 15, 31, 32) has a drive motor (19, 33, 41), downstream of which in terms of drive there are connected two gearings (17, 28) connected in parallel, and/or **in that**
b. the actuator (2, 9, 15, 31, 32) has a drive motor (19, 33, 41) which, via an intermediate shaft, simultaneously drives two gearings (27, 28), the outputs of which are connected rotationally conjointly to the torsion bar (16), and/or **in that**
c. the actuator (2, 9, 15, 31, 32) has a drive motor (19, 33, 41) which, via an intermediate shaft, simultaneously drives two gearings (27, 28), the outputs of which are connected rotationally conjointly to the torsion bar (16), wherein the intermediate shaft (26) is arranged coaxially with respect to the torsion bar (16), and/or **in that**
d. the actuator (2, 9, 15, 31, 32) has a drive motor (19, 33, 41) which, via an intermediate shaft, simultaneously drives two gearings (27, 28), the outputs of which are connected rotationally conjointly to the torsion bar (16), wherein the intermediate shaft (26) is designed to be less torsionally rigid than that part of the torsion bar (16) which is situated between the coupling points of the two gearings (27, 28).

11. Active suspension (1) according to any of Claims 8 to 10, **characterized in that** an actuator casing (25, 35) of the actuator (2, 9, 15, 31, 32) is mounted by means of a floating bearing (17).

12. Active suspension (1) according to any of Claims 8 to 11, **characterized in that**
a. the adjusting device (3, 8) comprises a torsion bar (16) and two actuators (31, 32), wherein, during an adjustment process, the actuators (31, 32) simultaneously exert a co-directional torque on the torsion bar (16), and/or **in that**
b. the adjusting device (3, 8) comprises a torsion bar (16) and two actuators (31, 32), wherein, during an adjustment process, the actuators (31, 32) simultaneously exert a co-directional torque on the torsion bar (16), wherein each of the two actuators (31, 32) has a dedicated drive motor (33, 41) and a dedicated gearing (38, 50) which is connected downstream of the drive motor (33, 41) in terms of drive, and/or **in that**
c. the adjusting device (3, 8) comprises a torsion bar (16) and two actuators (31, 32), wherein, during an adjustment process, the actuators (31, 32) simultaneously exert a co-directional torque on the torsion bar (16), wherein the two actuators (31, 32) are connected in parallel in terms of drive, and/or **in that**
d. the adjusting device (3, 8) comprises a torsion bar (16) and two actuators (31, 32), wherein, during an adjustment process, the actuators (31, 32) simultaneously exert a co-directional torque on the torsion bar (16), wherein an actuator casing (35, 44) of one of the actuators (31, 32) is mounted by means of a fixed bearing (18) and an actuator casing (35, 44) of the other of the actuators (31, 32) is mounted by means of a floating bearing (17), and/or **in that**
e. the adjusting device (3, 8) comprises a torsion bar (16) and two actuators (31, 32), wherein, during an adjustment process, the actuators (31, 32) simultaneously exert a co-directional torque on the torsion bar (16), wherein the two actuators (31, 32) are constructed and/or arranged mirror-symmetrically with respect to one another, and/or **in that**
f. the adjusting device (3, 8) comprises a torsion bar (16) and two actuators (31, 32), wherein, during an adjustment process, the actuators (31, 32) simultaneously exert a co-directional torque on the torsion bar (16), wherein the control device (14) activates the drive motors (33, 41) of the two actuators (31, 32) synchronously, and/or **in that**
g. the adjusting device (3, 8) comprises a torsion bar (16) and two actuators (31, 32), wherein, during an adjustment process, the actuators (31, 32) simultaneously exert a co-directional torque on the torsion bar (16), wherein the drives of the actuators (31, 32) are coupled to the torsion bar (16) at different coupling points, and/or **in that**
h. the adjusting device (3, 8) comprises a torsion bar (16) and two actuators (31, 32), wherein, during an adjustment process, the actuators (31, 32) simultaneously exert a co-directional torque on the torsion bar (16), wherein the drives of the actuators (31, 32) are coupled to the torsion bar (16) at different coupling points, and wherein a measuring device is provided, the control device (14) measures a twist of that part of the torsion bar (16) which is situated between the two coupling points of the two gearings (38, 50), and/or **in that**
i. the adjusting device (3, 8) comprises a torsion bar (16) and two actuators (31, 32), wherein, during an adjustment process, the actuators (31, 32) simultaneously exert a co-directional torque on the torsion bar (16), wherein the drives of the actuators (31, 32) are coupled to the torsion bar (16) at different coupling points, and wherein the control device (14) takes a twist of that part of the torsion bar (16) which is situated between the two coupling points of the two gearings (38, 50) into consideration in the activation of the two actuators (31, 32).

13. Active suspension (1) according to any of Claims 8 to 12, **characterized in that**
a. the control device (14) controls the adjusting device (3, 8) such that the force directed in the direction of the roadway both on the corner-outside wheel and on the corner-inside wheel of a vehicle axle during cornering is exerted in addition to a force which is exerted during straight-ahead travel or in addition to a force which is exerted on the corner-outside wheel and on the corner-inside wheel during acceleration-free and deceleration-free straight-ahead travel, or in that
b. the control device (14) controls the adjusting device (3, 8) such that the force directed away from the roadway both on the corner-outside wheel and on the corner-inside wheel of a vehicle axle during cornering is exerted in addition to a force which is exerted during straight-ahead travel or in addition to a force which is exerted on the corner-outside wheel and on the corner-inside wheel during acceleration-free and deceleration-free straight-ahead travel, or in that
c. the control device (14) controls the adjusting device (3, 8) such that the force directed in the direction of the roadway both on the corner-outside wheel and on the corner-inside wheel of a vehicle axle during cornering is not exerted during straight-ahead travel or during acceleration-free and deceleration-free straight-ahead travel, or in that
d. the control device (14) controls the adjusting device (3, 8) such that the force directed away from the roadway both on the corner-outside wheel and on the corner-inside wheel of a vehicle axle during cornering is not exerted during straight-ahead travel or during acceleration-free and deceleration-free straight-ahead travel.

14. Active suspension (1) according to any of Claims 8 to 13, **characterized in that**
a. the control device (14) additionally activates the adjusting device (3, 8) so as to effect pitch stabilization, and/or **in that**
b. the location of the coupling of the actuator (2, 9, 15, 31, 32) to the torsion bar (16) is variable during the operation of the suspension (1), and/or **in that**
c. the location of the coupling of a gearing of the actuator (2, 9, 15, 31, 32) to the torsion bar (16) is variable during the operation of the suspension (1), and/or **in that**
d. the locations of the coupling of multiple gearings (22, 27, 28, 38, 50) of the adjusting device (3, 8) to the torsion bar (16) are variable during the operation of the suspension (1).

15. Vehicle comprising an active suspension (1) according to any of Claims 8 to 14.

## Revendications

1. Procédé de commande d'une suspension active (1) d'un véhicule, **caractérisé en ce qu'**à l'aide d'au moins un dispositif de réglage actif (3, 8) qui contient au moins un actionneur (2, 9, 15, 31, 32), en cas de conduite en virage, une force orientée en direction de la voie de conduite est exercée tant sur la roue, d'un essieu de véhicule, située à l'extérieur du virage que sur celle située à l'intérieur du virage ou qu'une force orientée hors de la voie de conduite est exercée tant sur la roue, d'un essieu de véhicule, située à l'extérieur du virage que sur celle située à l'intérieur du virage.

2. Procédé selon la revendication 1, **caractérisé en ce que** :
a. le dispositif de réglage (3, 8) contient une barre de torsion (4, 10) sur laquelle un moment de rotation est exercé à l'aide de l'actionneur (2, 9, 15, 31, 32) en cas de phénomène de grande pente ; et/ou que
b. l'actionneur (2, 9, 15, 31, 32) comporte un moteur d'entraînement notamment électrique et une boîte de vitesses (22, 27, 28, 38, 50) connectée en aval du moteur d'entraînement sur le plan de la technique d'entraînement.

3. Procédé selon la revendication 1 ou 2, **caractérisé en ce que** :
a. en cas de conduite en virage, une force orientée en direction de la voie de conduite est respectivement exercée tant sur toutes les routes situées à l'extérieur du virage que sur toutes les routes situées à l'intérieur du virage d'un véhicule ; ou que
b. en cas de conduite en virage, une force orientée hors de la voie de conduite est respectivement exercée tant sur toutes les routes d'un véhicule situées à l'extérieur du virage que sur toutes les routes situées à l'intérieur du virage.

4. Procédé selon l'une quelconque des revendications 1 à 3, **caractérisé en ce que** :
a. l'actionneur (2, 9, 15, 31, 32) comporte un moteur d'entraînement en aval duquel deux boîtes de vitesses connectées en parallèle sont connectées en aval sur le plan de la technique d'entraînement ; et/ou que
b. l'actionneur (2, 9, 15, 31, 32) comporte un moteur d'entraînement entraînant simultanément, via un arbre intermédiaire, deux boîtes de vitesses dont les entraînements en sortie sont reliés fixement en rotation à la barre de torsion (16) ; et/ou que
c. l'actionneur (2, 9, 15, 31, 32) comporte un moteur d'entraînement entraînant simultanément, via un arbre intermédiaire, deux boîtes de vitesses dont les entraînements en sortie sont reliés fixement en rotation à la barre de torsion (16), l'arbre intermédiaire étant disposé dans le plan coaxial par rapport à la barre de torsion (16) ; et/ou que
d. l'actionneur (2, 9, 15, 31, 32) comporte un moteur d'entraînement entraînant simultanément, via un arbre intermédiaire, deux boîtes de vitesses dont les entraînements en sortie sont reliés solidairement en rotation à la barre de torsion (16), l'arbre intermédiaire étant réalisé avec une rigidité à la torsion moindre que la partie de la barre de torsion reposant entre les points de couplage des deux boîtes de vitesses.

5. Procédé selon l'une quelconque des revendications 1 à 3, **caractérisé en ce que** :
a. le dispositif de réglage contient une barre de torsion (16) et deux actionneurs (31, 32), sachant qu'en cas de processus de réglage avec les deux actionneurs (31, 32), un moment de rotation d'orientation identique est exercé simultanément sur la barre de torsion (16), et/ou que
b. le dispositif de réglage contient une barre de torsion (16) et deux actionneurs (31, 32), sachant qu'en cas de processus de réglage avec les deux actionneurs (31, 32), un moment de rotation d'orientation identique est exercé simultanément sur la barre de torsion (16), les deux actionneurs (31, 32) étant connectés en parallèle sur le plan de la technique d'entraînement ; et/ou que
c. le dispositif de réglage contient une barre de torsion (16) et deux actionneurs (31, 32), sachant qu'en cas de processus de réglage avec les deux actionneurs (31, 32), un moment de rotation d'orientation identique est exercé simultanément sur la barre de torsion (16), les deux actionneurs (31, 32) étant montés et/ou disposés l'un par rapport à l'autre en symétrie par rapport à un axe ; et/ou que
d. le dispositif de réglage contient une barre de torsion (16) et deux actionneurs (31, 32), sachant qu'en cas de processus de réglage avec les deux actionneurs (31, 32), un moment de rotation d'orientation identique est exercé simultanément sur la barre de torsion (16), les moteurs d'entraînement (33, 41) des deux actionneurs (31, 32) étant commandés de façon synchrone ; et/ou que
e. le dispositif de réglage contient une barre de torsion (16) et deux actionneurs (31, 32), sachant qu'en cas de processus de réglage avec les deux actionneurs (31, 32) un moment de rotation d'orientation identique est exercé simultanément sur la barre de torsion (16), les entraînements en sortie des actionneurs (31, 32) étant couplés en différents points de couplage au niveau de la barre de torsion (16) ; et/ou que
f. le dispositif de réglage contient une barre de torsion (16) et deux actionneurs (31, 32), sachant qu'en cas de processus de réglage avec les deux actionneurs (31, 32), un moment de rotation d'orientation identique est exercé simultanément sur la barre de torsion (16), une torsion de la partie de la barre de torsion (16) reposant entre les deux points de couplage des deux boîtes de vitesses étant mesurée en continu et étant prise en compte dans le pilotage des deux actionneurs (31, 32).

6. Procédé selon l'une quelconque des revendications 1 à 5, **caractérisé en ce que** :
a. la force orientée en direction de la voie de conduite en cas de conduite en virage tant sur la roue, d'un essieu de véhicule, située à l'extérieur du virage que sur celle située à l'intérieur du virage, est exercée en sus d'une force s'exerçant lors de la translation en ligne ou est exercée en sus d'une force s'exerçant sur la roue située à l'extérieur du virage et à l'intérieur du virage en cas de translation en ligne sans accélération et sans ralentissement ; ou que
b. la force exercée hors de la voie de conduite en cas de conduite en virage tant sur la roue, d'un essieu de véhicule, située à l'extérieur du virage que sur celle située à l'intérieur du virage est exercée en sus d'une force s'exerçant lors de la translation en ligne ou est exercée en sus d'une force s'exerçant sur la roue située à l'extérieur du virage et à l'intérieur du virage en cas de translation en ligne sans accélération et sans ralentissement ; ou que
c. la force orientée en direction de la voie de conduite en cas de conduite en virage tant sur la roue, d'un essieu de véhicule, située à l'extérieur du virage que sur celle située à l'intérieur du virage n'est pas exercée lors de la translation en ligne ou en cas de translation en ligne sans accélération et sans ralentissement ; ou que
d. la force exercée en cas de conduite en virage tant sur la roue, d'un essieu de véhicule, située à l'extérieur du virage que sur celle située à l'intérieur du virage en direction n'est pas exercée hors de la voie de conduite lors de la translation en ligne ou en cas de translation en ligne sans accélération et sans ralentissement.

7. Procédé selon l'une quelconque des revendications 1 à 6, **caractérisé en ce que** :
a. le dispositif de réglage (3, 8) est en outre commandé pour provoquer une stabilisation du tangage ; et/ou que
b. le lieu du couplage de l'actionneur (2, 9, 15, 31, 32) est modifié au niveau de la barre de torsion (16) pendant le fonctionnement de la suspension (1) ; et/ou que
c. le lieu du couplage d'une boîte de vitesses de l'actionneur (2, 9, 15, 31, 32) est modifié au niveau de la barre de torsion (16) pendant le fonctionnement de la suspension (1) ; et/ou que
d. les lieux de couplage de plusieurs boîtes de vitesses (22, 27, 28, 38, 50) du dispositif de réglage (3, 8) peuvent être modifiés au niveau de la barre de torsion (16) pendant le fonctionnement de la suspension (1).

8. Suspension active (1) avec un dispositif de réglage (3, 8) contenant au moins un actionneur (2, 9, 15, 31, 32), **caractérisée en ce qu'**un dispositif de commande (14) commande de telle sorte le dispositif de réglage (3, 8) que l'actionneur (2, 9, 15, 31, 32) exerce une force orientée en direction de la voie de conduit tant sur la roue, d'un essieu de véhicule, située à l'extérieur du virage que sur celle située à l'intérieur du virage en cas de conduite en virage ou qu'un dispositif de commande (14) commande de telle sorte le dispositif de réglage (3, 8) que l'actionneur (2, 9, 15, 31, 32) exerce une force orientée hors de la voie de conduite tant sur la roue, d'un essieu de véhicule, située à l'extérieur du virage que sur celle située à l'intérieur du virage.

9. Suspension active (1) selon la revendication 8, **caractérisée en ce que** :
a. le dispositif de réglage (3, 8) contient une barre de torsion (16) sur laquelle un moment de rotation est exercé à l'aide de l'actionneur (2, 9, 15, 31, 32) en cas de processus de réglage ; et/ou que
b. l'actionneur (2, 9, 15, 31, 32) comporte un moteur d'entraînement (19, 33, 41) et une boîte de vitesses (22, 27, 28, 38, 50) connectés en aval du moteur d'entraînement (19, 33, 41) sur le plan de la technique d'entraînement.

10. Suspension active (1) selon la revendication 8 ou 9, **caractérisée en ce que** :
a. l'actionneur (2, 9, 15, 31, 32) comporte un moteur d'entraînement (19, 33, 41) en aval duquel deux boîtes de vitesse (17, 28) sont connectées en parallèle sur le plan de la technique d'entraînement ; et/ou que
b. l'actionneur (2, 9, 15, 31, 32) comporte un moteur d'entraînement (19, 33, 41), entraînant simultanément, via un arbre intermédiaire, deux boîtes de vitesses (27, 28) dont les entraînements en sortie sont reliés solidairement en rotation à la barre de torsion (16) ; et/ou que
c. l'actionneur (2, 9, 15, 31, 32) comporte un moteur d'entraînement (19, 33, 41), entraînant simultanément, via un arbre intermédiaire, deux boîtes de vitesses (27, 28) dont les entraînements en sortie sont reliés solidairement en rotation à la barre de torsion (16), l'arbre intermédiaire (26) étant disposé dans le plan coaxial par rapport à la barre de torsion (16) ; et/ou que
d. l'actionneur (2, 9, 15, 31, 32) comporte un moteur d'entraînement (19, 33, 41), entraînant simultanément, via un arbre intermédiaire, deux boîtes de vitesses (27, 28) dont les entraînements en sortie sont reliés fixement en rotation à la barre de torsion (16), l'arbre intermédiaire (26) étant réalisé avec une rigidité à la torsion moindre que la partie de la barre de torsion (16) reposant entre les parties de couplage des deux boîtes de vitesses (27, 28).

11. Suspension active (1) selon l'une quelconque des revendications 8 à 10, **caractérisée en ce qu'**un carter d'actionneur (25, 35) de l'actionneur (2, 9, 15, 31, 32) est maintenu en place à l'aide d'un palier libre (17).

12. Suspension active (1) selon l'une quelconque des revendications 8 à 11, **caractérisée en ce que** :
a. le dispositif de réglage (3, 8) contient une barre de torsion (16) et deux actionneurs (31, 32), les actionneurs (31, 32) exerçant simultanément, en cas de processus de réglage, un moment de rotation d'orientation identique sur la barre de torsion (16) ; et/ou que
b. le dispositif de réglage (3, 8) contient une barre de torsion (16) et deux actionneurs (31, 32), les actionneurs (31, 32) exerçant simultanément, en cas de processus de réglage, un moment de rotation d'orientation identique sur la barre de torsion (16), chacun des deux actionneurs (31, 32) comportant un moteur d'entraînement (33, 41) propre et une boîte de vitesses (38, 50) propre connectée en aval du moteur d'entraînement (33, 41) sur le plan de la technique d'entraînement ; et/ou que
c. le dispositif de réglage (3, 8) contient une barre de torsion (16) et deux actionneurs (31, 32), les actionneurs (31, 32) exerçant simultanément, en cas de processus de réglage, un moment de rotation d'orientation identique sur la barre de torsion (16), les deux actionneurs (31, 32) étant connectés en parallèle sur le plan de la technique d'entraînement ; et/ou que
d. le dispositif de réglage (3, 8) contient une barre de torsion (16) et deux actionneurs (31, 32), les actionneurs (31, 32) exerçant simultanément, en cas de processus de réglage, un moment de rotation d'orientation identique sur la barre de torsion (16), un carter d'actionneur (35, 44) d'un des actionneurs (31, 32) étant maintenu en place à l'aide d'un palier fixe (18) et un carter d'actionneur (35, 44) de l'autre actionneur (31, 32) étant maintenu en place à l'aide d'un palier libre (17) ; et/ou que
e. le dispositif de réglage (3, 8) contient une barre de torsion (16) et deux actionneurs (31, 32), les actionneurs (31, 32) exerçant simultanément, en cas de processus de réglage, un moment de rotation d'orientation identique sur la barre de torsion (16), les deux actionneurs (31, 32) étant montés et/ou disposés l'un par rapport à l'autre en symétrie par rapport à un axe ; et/ou que
f. le dispositif de réglage (3, 8) contient une barre de torsion (16) et deux actionneurs (31, 32), les actionneurs (31, 32) exerçant simultanément, en cas de processus de réglage, un moment de rotation d'orientation identique sur la barre de torsion (16), le dispositif de commande (14) commandant de façon synchrone les moteurs d'entraînement (33, 41) des deux actionneurs (31, 32) ; et/ou que
g. le dispositif de réglage (3, 8) contient une barre de torsion (16) et deux actionneurs (31, 32), les actionneurs (31, 32) exerçant simultanément, en cas de processus de réglage, un moment de rotation d'orientation identique sur la barre de torsion (16), les entraînements en sortie des actionneurs (31, 32) étant couplés en différents points de couplage au niveau de la barre de torsion (16) ; et/ou que
h. le dispositif de réglage (3, 8) contient une barre de torsion (16) et deux actionneurs (31, 32), les actionneurs (31, 32) exerçant simultanément, en cas de processus de réglage, un moment de rotation d'orientation identique sur la barre de torsion (16), les entraînements en sortie des actionneurs (31, 32) étant couplés en différents points de couplage au niveau de la barre de torsion (16) et un dispositif de mesure étant présent, le dispositif de commande (14) mesurant une torsion de la partie de la barre de torsion (16) reposant entre les deux points de couplage des deux boîtes de vitesses (38, 50) ; et/ou que
i. le dispositif de réglage (3, 8) contient une barre de torsion (16) et deux actionneurs (31, 32), les actionneurs (31, 32) exerçant simultanément, en cas de processus de réglage, un moment de rotation d'orientation identique sur la barre de torsion (16), les entraînements en sortie des actionneurs (31, 32) étant couplés en différents points de couplage au niveau de la barre de torsion (16) et le dispositif de commande (14) prenant en compte une torsion de la partie de la barre de torsion (16) reposant entre les deux points de couplage des deux boîtes de vitesses (38, 50) dans le pilotage des deux actionneurs (31, 32).

13. Suspension active (1) selon l'une quelconque des revendications 8 à 12, **caractérisée en ce que** :
a. le dispositif de commande (14) commande le dispositif de réglage (3, 8) de telle sorte que la force orientée en direction de la voie de conduite en cas de conduite en virage tant sur la roue, d'un essieu de véhicule, située à l'extérieur du virage que sur celle située à l'intérieur du virage est exercée en sus d'une force s'exerçant lors de la translation en ligne ou est exercée en sus d'une force s'exerçant sur la roue située à l'extérieur du virage et à l'intérieur du virage en cas de translation en ligne sans accélération et sans ralentissement ; ou que
b. le dispositif de commande (14) commande le dispositif de réglage (3, 8) de telle sorte que la force exercée hors de la voie de conduite en cas de conduite en virage tant sur la roue, d'un essieu de véhicule, située à l'extérieur du virage que sur celle située à l'intérieur du virage est exercée en sus d'une force s'exerçant lors de la translation en ligne ou est exercée en sus d'une force s'exerçant sur la roue située à l'extérieur du virage et à l'intérieur du virage en cas de translation en ligne sans accélération et sans ralentissement ; ou que
c. le dispositif de commande (14) commande le dispositif de réglage (3, 8) de telle sorte que la force orientée en direction de la voie de conduite lors de la translation en ligne est exercée en cas de conduite en virage tant sur la roue, d'un essieu de véhicule, située à l'extérieur du virage que sur celle située à l'intérieur du virage ou n'est pas exercée en cas de translation en ligne sans accélération et sans ralentissement ; ou que
d. le dispositif de commande (14) commande le dispositif de réglage (3, 8) de telle sorte que la force exercée hors de la voie de conduite lors de la translation en ligne n'est pas exercée en cas de conduite en virage tant sur la roue, d'un essieu de véhicule, située à l'extérieur du virage que sur celle située à l'intérieur du virage ou n'est pas exercée en cas de translation en ligne sans accélération et sans ralentissement.

14. Suspension active (1) selon l'une quelconque des revendications 8 à 13, **caractérisée en ce que** :
a. le dispositif de commande (14) commande en sus le dispositif de réglage (3, 8) pour provoquer une stabilisation du tangage ; et/ou que
b. le lieu du couplage de l'actionneur (2, 9, 15, 31, 32) peut varier au niveau de la barre de torsion (16) pendant le fonctionnement de la suspension (1) ; et/ou que
c. le lieu du couplage d'une boîte de vitesses de l'actionneur (2, 9, 15, 31, 32) peut varier au niveau de la barre de torsion (16) pendant le fonctionnement de la suspension (1) ; et/ou que
d. les lieux de couplage de plusieurs boîtes de vitesses (22, 27, 28, 38, 50) du dispositif de réglage (3, 8) peuvent varier au niveau de la barre de torsion (16) pendant le fonctionnement de la suspension (1).

15. Véhicule contenant une suspension active (1) selon l'une quelconque des revendications 8 à 14.
